# FASCICULE DE BREVET EUROPEEN

(11) **EP 2 946 273 B1**
(45) Date de publication et mention de la délivrance du brevet: **29.08.2018**
(21) Numéro de dépôt: 14703146.2
(22) Date de dépôt: 14.01.2014
(51) Int. Cl.: G06F 3/0488, G06T 7/73, G06F 3/042, G06F 3/041, G06F 3/0354

(54) **SYSTEME ET PROCEDE DE DETECTION DE LA POSITION D'UN ORGANE D'ACTIONNEMENT SUR UN ECRAN D'AFFICHAGE**
SYSTEM UND VERFAHREN ZUR DETEKTION DER POSITION EINES BETÄTIGUNGSELEMENTS AUF EINEM BILDSCHIRM
SYSTEM AND METHOD FOR DETECTING THE POSITION OF AN ACTUATION MEMBER ON A DISPLAY SCREEN

(30) Priorité: 15.01.2013 FR 1350350
(43) Date de publication de la demande: 25.11.2015
(73) Titulaire: Commissariat à l'Energie Atomique et aux Energies Alternatives, 75015 Paris (FR); ISORG, 38000 Grenoble (FR)
(72) Inventeur: VAILLANT, Jérôme, 38000 Grenoble (FR)
(74) Mandataire: Cabinet Beaumont
(86) Numéro de dépôt international: PCT/FR2014/050067
(87) Numéro de publication internationale: WO 2014/111650

(56) Documents cités:
- EP-A1- 1 610 210
- US-A1- 2008 122 803
- US-A1- 2010 007 632
- US-A1- 2011 298 909

## Description

La présente demande de brevet revendique la priorité de la demande de brevet français FR13/50350.

### Domaine

La présente demande concerne un dispositif et un procédé de détection de la position d'un organe d'actionnement sur un écran d'affichage.

### Exposé de l'art antérieur

Il existe des systèmes d'interface utilisateur comprenant un écran d'affichage et un dispositif de détection de la position d'un organe d'actionnement, par exemple un stylet, un doigt ou la main d'un utilisateur sur l'écran d'affichage. Le dispositif de détection peut comprendre une surface sensible au toucher, ou surface tactile, qui peut être superposée à l'écran d'affichage. Le système d'interface utilisateur est généralement alors appelé écran tactile.

Les écrans tactiles sont actuellement utilisés dans de nombreux domaines. A titre d'exemple, ils ont déjà été utilisés pour commander des téléphones mobiles, des ordinateurs, des postes de télévision, des véhicules automobiles, des billetteries automatiques, des équipements industriels, des équipements médicaux, etc.

La demande de brevet WO 2011/119483 décrit un exemple de système d'interface utilisateur comprenant un écran d'affichage et un dispositif de détection d'un organe d'actionnement comprenant des diodes électroluminescentes et des photodétecteurs disposés sur les bords de l'écran de façon à détecter la présence de l'organe d'actionnement.

La publication intitulée "Active Matrix LCD with Integrated Optical Touch Screen" aux noms de W. den Boer, A. Abileah, P. Green, T. Larsson, S. Robinson et T. Nguyen (SID 03 DIGEST) décrit un écran d'affichage à cristaux liquides qui intègre des capteurs optiques qui sont utilisés pour détecter l'ombre d'un organe d'actionnement sur l'écran.

Le document US2010/007632 (D1) décrit un dispositif de détection de la position d'un organe d'actionnement sur un écran d'affichage.

### Résumé

Ainsi, un mode de réalisation prévoit un procédé comprenant les étapes suivantes :
afficher des premières images successives sur un écran ;
acquérir au moins une deuxième image ;
rechercher la position d'au moins un organe d'actionnement par rapport à l'écran à partir d'une analyse de la deuxième image ; et
modifier au moins l'une des prochaines premières images à afficher si des conditions de détermination de la position de l'organe d'actionnement dans la deuxième image sont seulement partiellement remplies.

Selon un mode de réalisation, la deuxième image correspond à l'image de la lumière arrivant sur l'écran.

Selon un mode de réalisation, l'intensité d'au moins certains pixels de la prochaine première image à afficher est augmentée ou diminuée.

Selon un mode de réalisation, seule une partie de la prochaine première image à afficher est modifiée.

Selon un mode de réalisation, la deuxième image est une image couleur comprenant au moins deux sous-images associées à des couleurs distinctes.

Selon un mode de réalisation, la position de l'organe d'actionnement par rapport à l'écran est recherchée à partir de la détection du reflet de la première image par l'organe d'actionnement dans chaque sous-image.

Selon un mode de réalisation, le procédé comprend la recherche dans chaque sous-image d'au moins un premier motif donné représentatif du reflet de la première image par l'organe d'actionnement.

Selon un mode de réalisation, les conditions de détermination de la position de l'organe d'actionnement par rapport à l'écran sont remplies si le reflet de la première image par l'organe d'actionnement est détecté à la même position dans chaque sous-image.

Selon un mode de réalisation, les conditions de détermination de la position de l'organe d'actionnement par rapport à l'écran sont seulement partiellement remplies si le reflet de la première image par l'organe d'actionnement est détecté dans au moins l'une des sous-images et n'est pas détecté dans toutes les sous-images.

Selon un mode de réalisation, la position de l'organe d'actionnement par rapport à l'écran est recherchée à partir de la détection de l'ombre de l'organe d'actionnement dans chaque sous-image.

Selon un mode de réalisation, le procédé comprend la recherche dans chaque sous-image d'au moins un deuxième motif donné représentatif de l'ombre de l'organe d'actionnement.

Selon un mode de réalisation, les conditions de détermination de la position de l'organe d'actionnement par rapport à l'écran sont remplies si l'ombre de l'organe d'actionnement est détectée à la même position dans chaque sous-image.

Selon un mode de réalisation, les conditions de détermination de la position de l'organe d'actionnement par rapport à l'écran sont seulement partiellement remplies si l'ombre de l'organe d'actionnement est détectée dans l'une des sous-images et n'est pas détectée dans toutes les sous-images.

Un mode de réalisation prévoit également un système comprenant :
un écran d'affichage de premières images successives ;
un dispositif d'acquisition d'au moins une deuxième image ;
un dispositif de recherche de la position d'au moins un organe d'actionnement par rapport à l'écran à partir d'une analyse de la deuxième image ; et
un dispositif de modification de la prochaine première image à afficher si des conditions de détermination de la position de l'organe d'actionnement dans la deuxième image sont seulement partiellement remplies.

Selon un mode de réalisation, le dispositif d'acquisition comprend une matrice de capteurs de photons, l'écran comprend une matrice de pixels d'affichage lumineux et la matrice de capteurs de photons recouvre l'écran ou est intégrée à la matrice de pixels d'affichage.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 représente, de façon partielle et schématique, un mode de réalisation d'un système d'interface utilisateur comprenant un écran d'affichage et un dispositif de détection d'un organe d'actionnement sur l'écran d'affichage ;
la figure 2 illustre, sous la forme d'un schéma-bloc, un mode de réalisation d'un procédé de détection d'un organe d'actionnement sur un écran d'affichage ;
la figure 3 est une coupe, partielle et schématique, d'un mode de réalisation de l'écran d'affichage du système d'interface de la figure 1 ;
la figure 4 illustre, sous la forme d'un schéma-bloc, un mode de réalisation plus détaillé d'un procédé de détection d'un organe d'actionnement sur un écran d'affichage ;
la figure 5 est une coupe, partielle et schématique, d'un mode de réalisation du dispositif de détection de l'organe d'actionnement du système d'interface de la figure 1 ;
la figure 6 est une vue de face, partielle et schématique, du dispositif de détection de la figure 5 ; et
la figure 7 représente, de façon partielle et schématique, un mode de réalisation du module de détection du système d'interface de la figure 1.

### Description détaillée

Par souci de clarté, de mêmes éléments ont été désignés par de mêmes références aux différentes figures et, de plus, les diverses figures ne sont pas tracées à l'échelle. En outre, seuls les éléments utiles à la compréhension des modes de réalisation ont été représentés et sont décrits. En particulier, l'utilisation faite des systèmes d'interface utilisateur décrits ci-après n'a pas été détaillée. L'homme de l'art sait utiliser les systèmes d'interface proposés dans tout type d'appareil susceptible d'être commandé via une interface avec et/ou sans contact. De plus, les moyens de traitement des informations fournies par les systèmes d'interface utilisateur décrits ci-après, et les moyens de liaison avec le ou les appareils à commander, sont à la portée de l'homme de l'art et ne sont pas décrits. Dans la suite de la description, sauf indication contraire, les termes "sensiblement", "environ" et "de l'ordre de" signifient "à 10 % près".

Dans la demande de brevet WO 2011/119483, la présence des diodes électroluminescentes et des photodétecteurs à la périphérie de l'écran d'affichage augmente l'encombrement du système d'interface utilisateur. En particulier, l'épaisseur du système d'interface doit être suffisante pour loger les diodes électroluminescentes et les photodétecteurs à la périphérie de l'écran d'affichage. En outre, l'efficacité de la détection peut être réduite dans le cas d'un fort éclairage ambiant, par exemple dans le cas où les rayons du soleil frappent directement l'écran d'affichage.

Dans la publication de W. den Boer et al., la détection de l'organe d'actionnement sur l'écran d'affichage est obtenue à partir de la détection de l'ombre de l'organe d'actionnement sur l'écran d'affichage. L'efficacité de la détection peut être réduite dans le cas où l'éclairage ambiant est faible ou nul ou dans le cas de fortes variations de l'éclairage ambiant.

Il serait souhaitable de disposer d'un procédé de détection, par un système d'interface utilisateur, de la position d'un organe d'actionnement sur un écran d'affichage dont la fiabilité est améliorée, en particulier en cas de fort éclairement et en cas de faible éclairement.

Ainsi, un objet d'un mode de réalisation est de prévoir un procédé de détection, par un système d'interface utilisateur, de la position d'un organe d'actionnement sur un écran d'affichage palliant au moins en partie certains des inconvénients des procédés existants.

Un autre objet d'un mode de réalisation est que la fiabilité de détection de l'organe d'actionnement est améliorée.

Un autre objet d'un mode de réalisation est que le système d'interface utilisateur peut être utilisé dans des conditions de fort éclairement et de faible éclairement.

Un autre objet d'un mode de réalisation est que le système d'interface utilisateur comprend un dispositif de détection de la position de l'organe d'actionnement recouvrant l'écran d'affichage ou intégré à l'écran d'affichage.

Un autre objet d'un mode de réalisation est que le dispositif de détection de la position de l'organe d'actionnement fonctionne avec ou sans contact de l'organe d'actionnement sur l'écran d'affichage.

Un autre objet d'un mode de réalisation est que le procédé de détection peut être mis en oeuvre avec tout type d'écran d'affichage, notamment un écran à cristaux liquides, un écran plasma ou un écran à base de composants semiconducteurs organiques, par exemple des diodes électroluminescentes organiques.

Un autre objet d'un mode de réalisation est que le procédé de détection peut être mis en oeuvre avec tout type de dispositif de détection à base de photodétecteurs, notamment des photodétecteurs réalisés par des matériaux semiconducteurs inorganiques ou organiques.

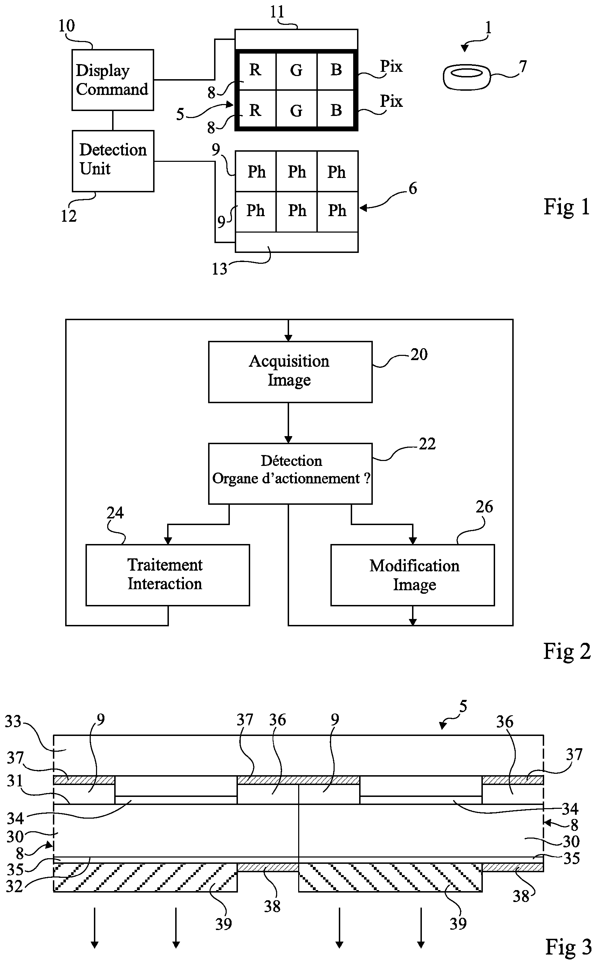

La figure 1 représente un mode de réalisation d'un système d'interface utilisateur 1 comprenant un écran 5 d'affichage émissif et un dispositif 6 de détection avec ou sans contact d'un organe d'actionnement 7. L'organe d'actionnement 7 peut correspondre à un stylet, un doigt ou la main d'un utilisateur.

Un pixel d'une image correspond à l'élément unitaire de l'image affichée par l'écran 5. Lorsque l'écran 5 est un écran d'affichage d'images couleur, l'écran d'affichage 5 comprend en général pour l'affichage de chaque pixel de l'image au moins trois composants d'émission et/ou de régulation de l'intensité lumineuse, également appelées sous-pixels d'affichage, qui émettent chacun un rayonnement lumineux sensiblement dans une seule couleur (par exemple, le rouge, le vert et le bleu). La superposition des rayonnements émis par ces trois sous-pixels d'affichage fournit à l'observateur la sensation colorée correspondant au pixel de l'image affichée. On appelle dans ce cas pixel d'affichage de l'écran d'affichage 5 l'ensemble formé par les trois sous-pixels d'affichage utilisés pour l'affichage d'un pixel d'une image. Lorsque l'écran 5 est un écran d'affichage d'images monochromes, l'écran d'affichage 5 comprend en général une seule source lumineuse pour l'affichage de chaque pixel de l'image.

L'écran d'affichage 5 comprend une matrice de sous-pixels d'affichage 8 (R, G, B) par exemple répartis en rangées et en colonnes. Deux pixels d'affichage lumineux Pix, comprenant chacun trois sous-pixels d'affichage, sont représentés en figure 1. Un écran d'affichage 5 peut comprendre de l'ordre de 300000 à 2000000 pixels d'affichage. Chaque sous-pixel d'affichage 8 comprend un composant électronique adapté à l'émission d'un signal lumineux et/ou à la régulation de l'intensité du signal lumineux le traversant et émis par une source de lumière pouvant être commune à plusieurs sous-pixels d'affichage 8. L'écran d'affichage 5 peut être un écran LCD (sigle anglais pour Liquid Crystal Display), un écran plasma ou un écran à base de composants semiconducteurs organiques. A titre d'exemple, dans le cas d'un écran LCD, chaque sous-pixel d'affichage 8 peut comprendre des cristaux liquides adaptés à plus ou moins laisser passer le faisceau lumineux issu d'une source de lumière qui peut être commune à plusieurs sous-pixels d'affichage.

Le dispositif 6 de détection comprend une matrice de capteurs de photons 9 (Ph) ou photodétecteurs, par exemple répartis en rangées et en colonnes. A titre d'exemple, seuls six photodétecteurs 9 sont représentés en figure 1. Un photodétecteur 9 est un composant électronique adapté à fournir un signal électrique qui dépend de la quantité de lumière reçue par le photodétecteur 9. Les photodétecteurs 9 peuvent comprendre des photodiodes, des photorésistances, des phototransistors, etc. Le nombre de photodétecteurs 9 peut être inférieur ou égal au nombre de sous-pixels d'affichage 8. De préférence, le nombre de photodétecteurs 9 est égal au nombre de sous-pixels d'affichage 8.

En figure 1, l'écran d'affichage 5 et le dispositif de détection 6 sont représentés de façon séparée pour des raisons de clarté. Toutefois, la matrice de photodétecteurs 9 peut être réalisée de façon intégrée à la matrice de sous-pixels d'affichage 8. A titre de variante, la matrice de photodétecteurs 9 peut recouvrir la matrice de sous-pixels d'affichage 8. Les photodétecteurs 9 sont protégés pour ne pas recevoir directement la lumière émise par l'écran d'affichage et recevoir seulement la lumière due à l'éclairage ambiant, c'est-à-dire le flux de lumière qui atteint l'écran d'affichage 5 depuis l'extérieur de l'écran d'affichage 5.

Le système 1 comprend un module de commande d'affichage 10 (Display Command) relié à l'écran d'affichage 5 par un module 11 de sélection des sous-pixels d'affichage 8. Le module de commande d'affichage 10 comprend, par exemple, une mémoire dans laquelle peut être stockée une image numérique. Par image numérique, on entend la représentation numérique d'une image. De préférence, l'image numérique comprend une matrice de valeurs numériques qui dépendent du type de codage de couleurs utilisé. Le module de commande 10 fournit à l'écran d'affichage 5 des signaux de commande adaptés pour obtenir l'affichage sur l'écran d'affichage d'une image correspondant à l'image numérique stockée. A titre d'exemple, dans le cas d'un écran LCD, le module 10 est adapté à commander l'affichage d'une image sur l'écran 5 en sélectionnant les cristaux liquides 9 bloquant le passage de la lumière ou laissant passer la lumière.

Le système 1 comprend un module 12 (Detection Unit) de détection de l'organe d'actionnement 7 relié à la matrice de photodétecteurs 9 par un module 13 de sélection de photodétecteurs 9. Les modules de sélection 11 et 13 peuvent être au moins en partie communs. Le module 12 comprend, par exemple, une mémoire dans laquelle peut être stockée une image numérique obtenue à partir des signaux fournis par les photodétecteurs 9.

Selon un mode de réalisation, le système 1 est réalisé en utilisant un écran d'affichage 5 classique auquel est ajouté le dispositif de détection 6. La matrice de photodétecteurs 9 recouvre alors la matrice de sous-pixels d'affichage 8.

Selon un autre mode de réalisation, la structure d'un écran d'affichage classique peut être modifiée pour réaliser les photodétecteurs 9 directement au niveau des sous-pixels d'affichage 8 de l'écran d'affichage 5. A titre d'exemple, lorsque l'écran d'affichage 5 correspond à un écran à cristaux liquides, le dispositif de détection 6 peut comprendre des photodétecteurs 9 tels que décrits dans la demande de brevet US 2010/0013793. Lorsque l'écran d'affichage comprend des diodes électroluminescentes organiques, le dispositif de détection 6 peut comprendre des photodétecteurs 9 réalisés à base de matériaux semiconducteurs organiques tels que décrits dans la demande de brevet français FR11/58607.

Un mode de réalisation va être décrit plus en détail dans le cas d'un écran LCD couleur. Toutefois, il est clair que l'écran d'affichage pourrait être d'un autre type, par exemple un écran plasma ou un écran à base de composants semiconducteurs organiques, par exemple des diodes électroluminescentes organiques.

La figure 2 représente, sous la forme d'un schéma-bloc, un mode de réalisation d'un procédé de détection d'une interaction entre un organe d'actionnement et un système d'interface utilisateur qui peut notamment être mis en oeuvre avec le système d'interface utilisateur 1 représenté en figure 1. Une détection d'une interaction entre l'organe d'actionnement et le système d'interface utilisateur correspond à la détection de la position de l'organe d'actionnement sur l'écran d'affichage (détection avec contact) ou à proximité de l'écran d'affichage (détection sans contact). Au moins les étapes 20, 22, 24 décrites ci-après peuvent être mises en oeuvre parallèlement à l'affichage d'images successives sur l'écran 5.

A l'étape 20, une nouvelle image numérique est acquise par le module de détection 12 à partir des signaux fournis par les photodétecteurs 9. On appelle pixel d'image un élément de la matrice d'une image. A titre d'exemple, la valeur numérique d'un pixel d'image de l'image acquise dépend du signal fourni par l'un des photodétecteurs 9.

La fréquence d'acquisition d'une nouvelle image numérique peut être faite à une cadence de 5 ou 10 Hertz. Elle peut être inférieure à la fréquence d'affichage de nouvelles images sur l'écran d'affichage 5. En outre, la fréquence d'acquisition de nouvelles images numériques peut ne pas être constante et varier en fonction de la nature des étapes réalisées ultérieurement lors de la mise en oeuvre du présent mode de réalisation du procédé de détection, comme cela sera décrit plus en détail par la suite. Le procédé se poursuit à l'étape 22.

A l'étape 22, le module 12 détermine si l'organe d'actionnement est détecté sur l'image numérique acquise. De façon générale, la présence de l'organe d'actionnement est détectée à partir d'une analyse des signaux fournis par les photodétecteurs 9. A titre d'exemple, il peut être recherché une variation de signaux de photodétecteurs 9 due à la présence de l'organe d'actionnement par rapport au niveau de ces signaux en l'absence de l'organe d'actionnement. Selon un autre exemple, il peut être recherché une variation de signaux de photodétecteurs 9 par rapport aux signaux de la dernière image numérique acquise. La recherche peut être effectuée pour tous les pixels de l'image numérique acquise ou seulement pour certains d'entre eux. Selon un mode de réalisation, le module 12 détermine des conditions qui doivent être satisfaites pour que l'organe d'actionnement soit détecté de façon certaine.

Le résultat d'un procédé d'analyse d'images pour la recherche de l'organe d'actionnement peut être :
une détection certaine de l'organe d'actionnement lorsque toutes les conditions de détection sont remplies ;
une absence certaine de détection de l'organe d'actionnement lorsqu'aucune condition de détection n'est remplie ; ou
une incertitude quant à la présence ou à l'absence de l'organe d'actionnement lorsque les conditions de détection sont seulement partiellement remplies.

Si, à l'étape 22, l'organe d'actionnement est détecté, le procédé se poursuit à l'étape 24. Si, à l'étape 22, l'organe d'actionnement n'est pas détecté, le procédé se poursuit à l'étape 20 par l'acquisition d'une nouvelle image numérique. Si, à l'étape 22, la détection de l'organe d'actionnement est incertaine, le procédé se poursuit à l'étape 26.

A l'étape 24, le procédé se poursuit par une action qui dépend de la position détectée de l'organe d'actionnement 7 par rapport à l'écran d'affichage 5. Il peut s'agir de tout type d'action selon le système d'interface considéré. Un exemple d'action peut comprendre l'affichage d'un menu, etc. Le procédé continue à l'étape 20.

A l'étape 26, le module d'affichage 10 modifie la prochaine image affichée par rapport à l'image qui aurait dû être affichée pour améliorer la fiabilité de la détection de l'organe d'actionnement par le procédé de recherche mis en oeuvre à l'étape 22, c'est-à-dire pour aboutir après la mise en oeuvre du procédé de recherche à l'étape 22 à une détection certaine ou une absence certaine de détection.

La modification apportée à l'image dépend du type d'algorithme de recherche utilisé à l'étape 22. Une possibilité de modification de l'image affichée consiste, pour la prochaine image affichée, ou pour des prochaines images affichées, à augmenter ou à diminuer le niveau des pixels d'image de l'image affichée, de la totalité de l'image ou seulement d'une partie de celle-ci. A titre d'exemple, le niveau d'au moins certains pixels d'affichage de la prochaine image affichée est augmenté ou diminué d'au moins 0,5 %, de préférence d'au moins 1 %, plus préférentiellement d'au moins 2 %, en particulier d'au moins 5 %. De façon avantageuse, la variation du niveau des pixels d'image n'est alors pas perçue ou seulement faiblement perçue par l'observateur. Selon un autre exemple, le niveau d'au moins certains pixels d'affichage de la prochaine image affichée est augmenté ou diminué d'au moins 5 %, de préférence d'au moins 10 %. Ceci permet, de façon avantageuse, d'augmenter les chances d'une détection de l'organe d'actionnement sur la ou les prochaines images acquises. A titre d'exemple, le niveau de moins de 50%, de préférence de moins de 25 %, plus préférentiellement de moins de 15 %, encore plus préférentiellement de moins de 10 %, des pixels d'affichage de la prochaine image affichée est augmenté ou diminué par rapport aux pixels d'image de l'image qui aurait dû être affichée.

Pour ne pas perturber la vision de l'utilisateur, la modification peut être réalisée sur un nombre réduit d'images affichées successives ou peut être réalisée de façon intermittente. A titre d'exemple, la modification est maintenue au plus sur 100, de préférence sur 50, plus préférentiellement sur 25, encore plus préférentiellement sur 10, images et est, de toute façon, interrompue si une détection certaine ou une absence de détection certaine a lieu. Selon un exemple, si une détection certaine ou une absence certaine de détection n'est pas déterminée lorsque le nombre total d'images modifiées à afficher est atteint, alors le module de détection 12 détermine qu'il y a absence certaine de détection.

A titre d'exemple, lorsque la modification de l'image affichée est réalisée de façon intermittente, la modification est réalisée sur une image affichée toutes les deux, trois ou quatre images. Selon un exemple, lorsque la modification de l'image affichée est réalisée de façon intermittente, une image numérique est acquise seulement après l'affichage d'une image modifiée. Selon un autre exemple, lorsque la modification de l'image affichée est réalisée de façon intermittente, des images sont acquises après l'affichage d'une image modifiée et après l'affichage d'une image non modifiée. L'image acquise après l'affichage d'une image non modifiée peut être soustraite de l'image acquise après l'affichage d'une image modifiée, et la recherche de l'organe d'actionnement peut être réalisée sur l'image ainsi obtenue.

En outre, l'augmentation ou la diminution des valeurs de pixels d'image de l'image affichée peut être réalisée de façon progressive, par exemple d'au moins 1 %, de préférence d'au moins 2 %, plus préférentiellement d'au moins 5 %, encore plus préférentiellement d'au moins 10 % à chaque affichage d'une nouvelle image modifiée, tant qu'une détection incertaine est obtenue et jusqu'à ce qu'un seuil soit atteint. Le seuil correspond, par exemple, à une variation totale du niveau de pixels de l'image par rapport à l'image qui aurait dû être affichée de 50 %, voire de 100 %.

A titre d'exemple, si une détection certaine ou une absence certaine de détection n'est pas déterminée lorsque le seuil est atteint, alors le module de détection 12 détermine qu'il y a absence certaine de détection. Selon un autre exemple, lorsque le seuil est atteint, des images modifiées peuvent continuer à être affichées sans prévoir toutefois une variation supplémentaire du niveau des pixels d'image modifiés.

En outre, dans le cas d'une détection incertaine, la fréquence d'acquisition des images peut être temporairement augmentée jusqu'à l'obtention d'une détection certaine ou de l'absence certaine de détection. A titre d'exemple, la fréquence d'acquisition des images peut être temporairement multipliée par au moins 2, de préférence au moins 3, plus préférentiellement au moins 5, encore plus préférentiellement au moins 10. A titre d'exemple, dans le cas où la fréquence d'acquisition des images dans le cas d'une détection certaine ou de l'absence de détection est de 5 à 10 Hz, la fréquence d'acquisition des images, dans le cas d'une détection incertaine, peut être temporairement augmentée jusqu'à 50 à 100 Hz.

La figure 3 représente un mode de réalisation de l'écran d'affichage 5 du système 1 de la figure 1 dans le cas d'un écran LCD couleur. Deux sous-pixels d'affichage 8 adjacents sont représentés en figure 1. A titre d'exemple, chaque pixel d'affichage peut être à base carrée dont le côté est typiquement de l'ordre de 200 µm. A titre d'exemple, chaque pixel d'affichage comprend trois sous-pixels d'affichage 8 à base rectangulaire dont les côtés sont de l'ordre de 50 µm et 200 µm avec un espacement de 20 µm entre les sous-pixels d'affichage, cet espacement servant aux lignes et transistors d'adressage et à leur masquage comme cela est décrit par la suite. Chaque sous-pixel d'affichage 8 comprend un bloc 30 de cristaux liquides qui s'étend sensiblement sur toute la surface du sous-pixel d'affichage 8. La matrice de cristaux liquides 30 définit deux faces principales 31, 32 sensiblement parallèles et opposées. Un dispositif de rétro-éclairage 33 est disposé du côté de la face 31. Le dispositif de rétro-éclairage 33 peut être commun à l'ensemble des sous-pixels d'affichage 8. A titre d'exemple, le dispositif de rétro-éclairage 33 peut comprendre des tubes fluorescents ou des diodes électroluminescentes. A titre d'exemple, le dispositif de rétro-éclairage 33 émet une lumière blanche qui traverse plus ou moins chaque bloc 30 de cristaux liquides en fonction de la polarisation de ces cristaux.

Des électrodes 34 sont disposées sur la face 31 et des électrodes 35 sont disposées sur la face 32. Les électrodes 34, 35 sont constituées d'un matériau conducteur et transparent, par exemple de l'oxyde d'indium dopé à l'étain ou ITO (sigle anglais pour Indium Tin Oxyde). A titre d'exemple, les électrodes 35 forment une couche continue d'un matériau conducteur et transparent recouvrant la totalité de la face 32 qui peut également être complétée par des lignes ou des colonnes constituées d'un matériau non transparent mais significativement moins résistif que le matériau conducteur et transparent (par exemple de l'aluminium, de l'argent ou du cuivre) déposé sur les espaces entre les sous-pixels d'affichage. Chaque bloc de cristaux liquides 30 peut être rendu plus ou moins opaque au flux de lumière fourni par le dispositif de rétro-éclairage 33 par l'application d'une tension entre les électrodes 34, 35 prenant en sandwich le bloc de cristaux liquides 30. Les électrodes 34, 35 sont sélectionnées par le module de sélection 11 qui comprend pour chaque sous-pixel d'affichage 8 un bloc de sélection 36 disposé entre le dispositif de rétro-éclairage 33 et le bloc de cristaux liquides 30. Chaque bloc de sélection 36 peut comprendre un ou plusieurs transistors.

Des portions non transparentes 37 sont disposées entre le dispositif de rétro-éclairage 33 et les blocs de sélection 36. Les blocs de sélection 36 ne reçoivent donc pas la lumière émise par le dispositif de rétro-éclairage 33. Des portions non transparentes 38 sont disposées sur les électrodes 35 sensiblement en vis-à-vis de chaque bloc de sélection 36. Les blocs de sélection 36 ne reçoivent donc pas la lumière de l'éclairage ambiant. Les portions opaques 37, 38 sont, par exemple, réalisées en un matériau métallique.

L'électrode 35 de chaque sous-pixel d'affichage 8 est recouverte d'une portion 39 d'un matériau adapté à filtrer les ondes lumineuses qui le traversent en fonction de la longueur d'onde. Chaque portion 39 est, par exemple, réalisée dans une résine colorée. Les portions 39 sont appelées filtres colorés par la suite. A titre d'exemple, chaque filtre coloré 39 recouvre la totalité de l'électrode 35 du sous-pixel d'affichage 8 à l'exception de la partie de l'électrode 35 recouverte par la portion opaque 38. De préférence, chaque filtre coloré 39 est adapté à laisser passer préférentiellement les ondes lumineuses dans une plage de longueurs d'onde autour d'une longueur d'onde spécifique. A titre d'exemple, trois filtres colorés 39 associés à trois longueurs d'onde spécifiques différentes peuvent être utilisés. Les longueurs d'onde spécifiques peuvent correspondre aux longueurs d'onde de couleurs primaires ou être proches de celles-ci. Les trois couleurs primaires sont, par exemple, le rouge, le vert et le bleu. Les filtres colorés 39 peuvent être répartis sur la matrice de sous-pixels d'affichage 8 selon une alternance des trois couleurs selon les rangées ou les colonnes.

Pour chaque sous-pixel d'affichage 8, le photodétecteur 9 est disposé sur la face 31 et est représenté de façon schématique en figure 3 par un bloc. A titre d'exemple, chaque photodétecteur 9 peut être inscrit dans un carré ayant 20 µm de côté. A titre d'exemple, le photodétecteur 9 associé à un sous-pixel d'affichage 8 peut être adjacent au bloc de sélection 36 associé à un sous-pixel d'affichage 8 adjacent. De façon avantageuse, pour un écran LCD, les photodétecteurs 9 peuvent être réalisés sous la forme de phototransistors. Ce mode de réalisation présente l'avantage de ne pas modifier la technologie utilisée pour réaliser la matrice d'adressage de l'écran LCD.

Les portions opaques 37 sont interposées entre le dispositif de rétro-éclairage 33 et les photodétecteurs 9. Les photodétecteurs 9 ne reçoivent donc pas la lumière émise par le dispositif de retro-éclairage 33. Les portions opaques 38 ne sont pas situées en vis-à-vis des photodétecteurs 9. Pour chaque sous-pixel d'affichage 8, le filtre coloré 39 s'étend également en vis-à-vis du photodétecteur 9 du sous-pixel d'affichage 8. Chaque photodétecteur 9 reçoit donc la lumière provenant de l'éclairage ambiant après filtrage par le filtre de couleur 39 du sous-pixel d'affichage 8.

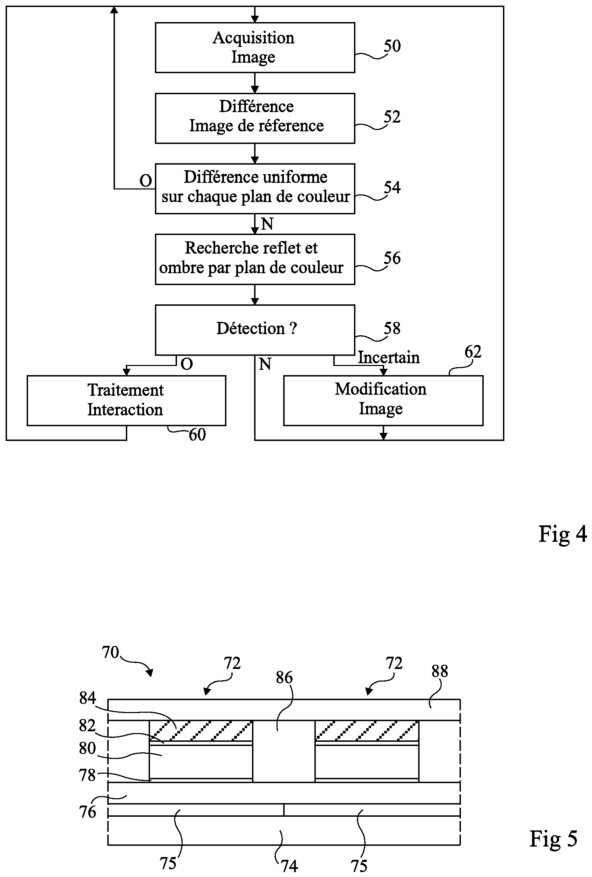

La figure 4 illustre, sous la forme d'un schéma-bloc, un mode de réalisation plus détaillé d'un procédé de détection d'une interaction entre un organe d'actionnement et un système d'interface utilisateur qui peut notamment être mis en oeuvre avec le système d'interface utilisateur 1 représenté en figure 1 dans le cas où l'écran d'affichage 5 est un écran couleur. Une détection d'une interaction entre l'organe d'actionnement et le système d'interface utilisateur correspond à la détection de la position de l'organe d'actionnement sur l'écran d'affichage (détection avec contact) ou à proximité de l'écran d'affichage (détection sans contact).

A l'étape 50, une nouvelle image numérique est acquise par le module de détection 12 comme cela a été décrit précédemment pour l'étape 20 du procédé illustré en figure 2. De préférence, chaque image numérique peut se diviser en trois sous-images numériques, chaque sous-image étant obtenue à partir des signaux fournis par les photodétecteurs 9 de sous-pixels d'affichage 8 associés à l'une des trois longueurs d'onde spécifiques décrites précédemment. Dans la suite de la description, on appelle image dans un plan de couleur donné la sous-image associée à cette couleur. A titre d'exemple, on considère les trois sous-images associées aux couleurs primaires rouge, vert et bleu. On appelle pixel de couleur un élément de la matrice d'une sous-image. A titre d'exemple, la valeur numérique d'un pixel de couleur dépend du signal fourni par l'un des photodétecteurs 9. Selon la répartition des filtres colorés 39, les sous-images peuvent ne pas avoir le même nombre de pixels de couleur. Toutefois, de préférence, les sous-images ont le même nombre de pixels de couleur. Le procédé se poursuit à l'étape 52.

Le principe du présent mode de réalisation du procédé de détection se base sur le fait que la valeur numérique de chaque pixel de couleur peut être divisée en une première composante et une deuxième composante.

La première composante est représentative du flux de lumière de l'éclairage ambiant qui atteint l'écran d'affichage 5. En l'absence d'un organe d'actionnement disposé au contact de l'écran d'affichage 5 ou suffisamment près de l'écran d'affichage 5, l'image numérique acquise ne dépend que des caractéristiques des sources de lumière de l'éclairage ambiant. En particulier, si l'éclairage ambiant est fixe, les images numériques acquises de façon successive sont sensiblement identiques en l'absence de l'organe d'actionnement. Lorsque l'organe d'actionnement est au contact de l'écran d'affichage ou à proximité de l'écran d'affichage, la première composante est, en outre, représentative de l'ombre due à l'interposition de l'organe d'actionnement entre les sources de lumière de l'éclairement ambiant et l'écran d'affichage 5.

La deuxième composante est représentative de la réflexion de l'image affichée par l'écran d'affichage 5. En l'absence d'organe d'actionnement, le signal de réflexion est extrêmement faible et se noie dans l'éclairage ambiant. En effet, on peut considérer que l'écran d'affichage 5 agit comme une source lumineuse dont la lumière est diffusée par les objets autour de l'écran d'affichage 5 et peut être détectée par les photodétecteurs 9. En présence d'un organe d'actionnement qui interagit avec l'écran d'affichage 5, avec ou sans contact, la deuxième composante augmente dans la zone où l'organe d'actionnement est proche de l'écran d'affichage 5 en raison de la réflexion de l'image affichée sur l'organe d'actionnement. En outre, plus l'organe d'actionnement est proche de l'écran d'affichage, plus l'image réfléchie est proche de l'image affichée au moins localement dans la zone où l'organe d'actionnement est proche de l'écran d'affichage 5.

Les étapes 52 à 58 décrites ci-après illustrent un mode de réalisation plus détaillé de l'étape 22 décrite précédemment.

A l'étape 52, le module de détection 12 détermine une image numérique modifiée en calculant la différence entre l'image numérique acquise et une image numérique de référence. La différence peut être réalisée pixel de couleur par pixel de couleur pour chaque plan de couleur. Selon un mode de réalisation, l'image de référence correspond à l'image numérique acquise en l'absence d'interaction entre l'organe d'actionnement et l'écran d'affichage 5. Le procédé se poursuit à l'étape 54.

A l'étape 54, le module de détection 12 détermine, pour chaque plan de couleur de l'image modifiée, si les valeurs des pixels de couleur sont sensiblement constantes. Si c'est le cas, ceci signifie que l'image numérique acquise est peu différente de l'image de référence et qu'il n'y a donc pas d'interaction entre l'organe d'actionnement et l'écran d'affichage 5. Le procédé se poursuit alors à l'étape 50 par l'acquisition d'une nouvelle image numérique. L'image de référence peut alors correspondre à la dernière image numérique acquise ou à la moyenne, pixel de couleur par pixel de couleur, des dernières images numériques acquises sans interaction. Si les niveaux des pixels de couleur ne sont pas constants, ceci signifie que l'image numérique acquise est différente de l'image de référence. Le procédé se poursuit alors à l'étape 56.

A l'étape 56, le module de détection 12 recherche s'il y a une interaction entre l'organe d'actionnement et l'écran d'affichage 5 selon au moins un algorithme de recherche, notamment parmi les premier ou deuxième algorithmes de recherche décrits par la suite, et de préférence selon au moins deux algorithmes de recherche, notamment les premier et deuxième algorithmes de recherche décrits par la suite.

Le premier algorithme de recherche consiste à rechercher la réflexion d'une partie de l'image affichée sur l'organe d'actionnement pour en déduire une information représentative de la position de l'organe d'actionnement par rapport à l'écran d'affichage 5. De préférence, le premier algorithme est mis en oeuvre séparément pour chaque plan de couleur. Selon un mode de réalisation, le module de détection 12 recherche, dans chaque plan de couleur, s'il existe une corrélation locale entre l'image numérique acquise et l'image numérique associée à l'image affichée.

Plus précisément, selon un mode de réalisation, le module de détection 12 détermine, dans chaque plan de couleur, une image affichée modifiée à partir de l'image numérique affichée et une image acquise modifiée à partir de l'image numérique acquise. Chaque pixel de couleur de l'image affichée modifiée correspond à la valeur de ce pixel de couleur de l'image numérique affichée diminuée de la valeur moyenne de tous les pixels de couleur du même plan de couleur. Chaque pixel de couleur de l'image acquise modifiée correspond à la valeur de ce pixel d'image de l'image numérique acquise diminuée de la valeur moyenne de tous les pixels de couleur du même plan de couleur.

Le module de détection 12 peut, en outre, déterminer pour chaque plan de couleur, une image de travail pour laquelle la valeur numérique de chaque pixel de couleur est égale à la différence entre la valeur numérique du même pixel de couleur de l'image affichée modifiée et la valeur numérique du même pixel de couleur de l'image acquise modifiée. Dans le cas d'une interaction, les valeurs numériques diminuent localement dans la zone de l'image où l'interaction a lieu.

Le module de détection 12 peut rechercher dans l'image de travail des motifs connus en fonction de la forme attendue de l'organe d'actionnement. Ceci permet, de façon avantageuse, d'obtenir un filtrage de l'organe d'actionnement détecté selon sa forme et d'éviter une fausse détection dans le cas où un objet au contact ou à proximité de l'écran d'affichage n'a pas la forme attendue. A titre d'exemple, ceci permet d'éviter la détection de la paume de la main de l'utilisateur lorsqu'une détection d'un doigt ou de plusieurs doigts de l'utilisateur est attendue. Un exemple de procédé consiste à déterminer la corrélation entre l'image de travail et le motif pour différentes positions du motif par rapport à l'image de travail. Une détection a, par exemple, lieu dans le cas où la corrélation est supérieure à un seuil de détection donné. A titre d'exemple, une seule interaction entre l'organe d'actionnement et l'écran peut être recherchée. Dans ce cas, il peut être recherché la position du motif par rapport à l'image de travail pour laquelle la corrélation entre l'image de travail et le motif est maximale. Selon un autre exemple, plusieurs interactions entre l'organe d'actionnement et l'écran peuvent être recherchées simultanément. C'est le cas, par exemple, lorsque l'utilisateur peut utiliser plusieurs doigts pour interagir avec l'écran. Dans ce cas, il peut être recherché les positions du motif par rapport à l'image de travail pour lesquelles la corrélation entre l'image de travail et le motif atteint un maximum local ou est supérieure au seuil de détection.

Le module de détection 12 peut déterminer, à partir de la position ou des positions du motif par rapport à l'image de travail pour laquelle la corrélation est maximale, la position de détection ou les positions de détection de l'organe d'actionnement par rapport à l'écran d'affichage 5.

A titre d'exemple, lorsque l'organe d'actionnement n'a pas encore été détecté, le module de détection 12 peut déterminer la corrélation entre l'image de travail et le motif pour toutes les positions possibles du motif par rapport à l'image de travail. Lorsque l'organe d'actionnement a été détecté, le module de détection 12 peut d'abord déterminer la corrélation entre l'image de travail et le motif seulement pour des positions proches de la dernière position du motif ou les dernières positions du motif par rapport à l'image de travail pour lesquelles la corrélation a été maximale, éventuellement localement, ou supérieure au seuil de détection. Si aucune détection n'a lieu, la recherche peut être poursuivie sur la totalité de l'image de travail.

Le deuxième algorithme de recherche consiste à rechercher l'ombre de l'organe d'actionnement sur l'image numérique acquise. De préférence, le deuxième algorithme est mis en oeuvre séparément pour chaque plan de couleur. Selon un mode de réalisation, le module de détection 12 recherche, dans chaque plan de couleur, un minimum local des valeurs des pixels de couleur, par exemple selon un motif particulier, qui est représentatif de l'ombre de l'organe d'actionnement. Une détection a, par exemple, lieu si le minimum est inférieur à un seuil donné. Le module de détection 12 peut déterminer, à partir de la position du minimum par rapport à l'image de travail, la position de détection de l'organe d'actionnement par rapport à l'écran d'affichage 5. Le procédé se poursuit à l'étape 58.

A titre d'exemple, lorsque l'organe d'actionnement n'a pas encore été détecté, le module de détection 12 peut rechercher le minimum local sur la totalité de l'image numérique acquise. Lorsque l'organe d'actionnement a été détecté, le module de détection 12 peut d'abord rechercher le minimum local seulement pour des positions de l'image numérique acquise proches de la dernière position détectée du minimum local. Si aucune détection n'a lieu, la recherche peut être poursuivie sur la totalité de l'image numérique acquise.

En outre, lorsque l'organe d'actionnement n'a pas encore été détecté dans un plan de couleur donné, le module de détection peut d'abord rechercher l'organe d'actionnement, par la mise en oeuvre du premier ou du deuxième algorithme décrit précédemment, à la position ou aux positions auxquelles il a été détecté dans un autre plan de couleur.

A l'étape 58, le module de détection 12 détermine si une détection certaine, une détection incertaine ou une absence de détection est obtenue après la mise en oeuvre du premier algorithme de recherche, et éventuellement du deuxième algorithme de recherche. Le module de détection 12 peut déterminer, pour le premier algorithme de recherche, si l'organe d'actionnement a été détecté à une même position par rapport à l'écran d'affichage pour les trois plans de couleur. Si cela est le cas, la détection de l'organe d'actionnement est certaine et le procédé se poursuit à l'étape 60. De façon analogue, pour le deuxième algorithme de recherche, le module de détection 12 peut déterminer si l'ombre de l'organe d'actionnement sur l'écran d'affichage 5 est détectée au même endroit pour les trois plans de couleur. Si cela est le cas, la détection de l'organe d'actionnement est certaine et le procédé se poursuit à l'étape 60. Dans le cas où aucun reflet n'a été détecté par le premier algorithme de recherche pour aucun plan de couleur ou aucune ombre n'a été détectée par le deuxième algorithme de recherche pour aucun plan de couleur, il y a absence certaine de détection et le procédé continue à l'étape 50. Dans les autres cas, la détection est incertaine et le procédé se poursuit à l'étape 62.

Un exemple de détection incertaine se produit si, lors de la mise en oeuvre de chaque algorithme, il y a au moins un plan de couleur pour lequel aucune détection n'a été obtenue et au moins un plan de couleur pour lequel une détection a été obtenue. Un autre exemple de détection incertaine se produit si, lors de la mise en oeuvre du premier et/ou du deuxième algorithme, une détection a été obtenue pour les trois plans de couleur correspondant à des positions de détection différentes de l'organe d'actionnement par rapport à l'écran d'affichage 5.

A l'étape 60, le procédé se poursuit par une action en fonction de la position de détection de l'organe d'actionnement par rapport à l'écran d'affichage 5 comme cela a été décrit précédemment pour l'étape 24 du procédé illustré à la figure 2. Le procédé continue à l'étape 50.

A l'étape 62, le module d'affichage 10 modifie la prochaine image affichée par rapport à l'image qui aurait dû être affichée pour améliorer la fiabilité de la détection de l'organe d'actionnement comme cela a été décrit précédemment pour l'étape 26 du procédé illustré à la figure 2.

Dans le cas d'une détection incertaine issue de la mise en oeuvre du premier algorithme de détection, l'absence de détection de la réflexion de l'image affichée dans un plan de couleur peut être due à une faible réflexion pour cette couleur ou à un éclairement ambiant qui masque la réflexion pour cette couleur. Une possibilité de modification de l'image affichée consiste alors, pour la prochaine image affichée, ou pour des prochaines images affichées, à augmenter le niveau des pixels de couleur de l'image affichée dans le plan de couleur où la détection est incertaine.

Dans le cas d'une détection incertaine issue de la mise en oeuvre du deuxième algorithme de détection, l'absence de détection de l'ombre de l'organe d'actionnement dans un plan de couleur peut être due à une compensation de l'ombre par la réflexion de l'image affichée pour cette couleur. Une possibilité de modification de l'image affichée consiste alors, pour la prochaine image affichée, ou pour des prochaines images affichées, à diminuer les valeurs des pixels de couleur de l'image dans le plan de couleur ou dans les plans de couleur où l'ombre est attendue et n'a pas été détectée.

Dans le cas d'une détection incertaine issue de la mise en oeuvre du premier ou du deuxième algorithme de détection, le niveau des pixels de couleur dans le plan de couleur peut être augmenté ou diminué seulement localement, à la position ou aux positions où l'organe d'actionnement a été détecté dans les autres plans de couleur. En outre, le niveau des pixels de couleur peut également être augmenté dans un plan de couleur dans lequel une détection a été réalisée, dans la totalité du plan de couleur ou seulement localement à la position de la détection.

Pour ne pas perturber la vision de l'utilisateur, la modification peut être réalisée sur un nombre réduit d'images successives ou peut être réalisée de façon intermittente, par exemple une image sur deux ou sur trois. Dans ce dernier cas, le premier algorithme de recherche n'est mis en oeuvre que lorsque l'image affichée est modifiée. En outre, la modification des valeurs de pixels de couleur peut être réalisée pour tous les pixels de couleur du plan de couleur ou seulement pour les pixels de couleur de la partie du plan de couleur où l'ombre est attendue. En outre, l'augmentation ou la diminution des valeurs de pixels de couleur de l'image affichée peut être réalisée de façon progressive, par exemple de 5 % à chaque affichage d'une nouvelle image, tant qu'une détection incertaine est obtenue et jusqu'à ce qu'un seuil soit atteint. Si une détection certaine n'est pas obtenue lorsque le seuil est atteint, alors le module de détection 12 détermine qu'il y a absence de détection. Dans le cas d'une détection incertaine, la fréquence d'acquisition des images peut être temporairement augmentée jusqu'à l'obtention d'une détection certaine ou de l'absence de détection de façon à accélérer la détermination de la détection certaine ou de l'absence de détection. De façon plus générale, dans le cas d'une détection, certaine ou incertaine, la fréquence d'acquisition des images peut être temporairement augmentée jusqu'à la fin de la détection de l'organe d'actionnement. Ceci permet de détecter les changements de positions de l'organe d'actionnement de façon fluide et rapide sans toutefois solliciter le module de détection 12 de façon excessive en l'absence de détection.

Selon un mode de réalisation, à l'étape 50, l'image numérique acquise peut être utilisée pour déterminer l'intensité de l'éclairage ambiant. L'intensité de l'éclairage ambiant peut être obtenue en déterminant la luminance de l'image numérique acquise. Lorsque les images numériques acquises sont codées dans l'espace de couleur RGB, l'intensité de l'éclairage ambiant peut être obtenue en réalisant une transformation matricielle de l'image numérique acquise depuis l'espace de couleur RGB vers l'espace XYZ et en utilisant la valeur de la luminance Y. Selon un mode de réalisation, la luminosité de l'image affichée par l'écran d'affichage 5 peut être modifiée en fonction de la valeur moyenne de la luminance Y des pixels de couleur de l'image numérique acquise.

Selon un mode de réalisation, à l'étape 50, l'image numérique acquise peut être utilisée pour déterminer la couleur générale de l'éclairage ambiant. La couleur générale de l'éclairage ambiant peut être obtenue en déterminant la couleur générale de l'image numérique acquise. Lorsque les images numériques acquises sont codées dans l'espace de couleur RGB, la couleur générale de l'éclairage ambiant peut être obtenue en réalisant une transformation matricielle de l'image numérique acquise depuis l'espace de couleur RGB vers l'espace HSV et en utilisant la valeur de teinte H. Selon un mode de réalisation, la luminosité de l'image affichée par l'écran d'affichage 5 peut être modifiée en fonction de la valeur moyenne de la teinte H des pixels de couleur de l'image numérique acquise.

Les modifications de luminosité ou de couleur peuvent être réalisées globalement ou localement. En effet, il est possible de réaliser une correction locale de la luminosité ou de la couleur de l'image affichée. A titre d'exemple, dans le cas où le soleil frappe seulement une partie de l'écran d'affichage 5, la luminosité de l'image affichée peut être augmentée localement seulement sur cette partie.

De façon avantageuse, le premier algorithme de recherche n'est pas perturbé en cas de faible éclairage ambiant et le deuxième algorithme de recherche n'est pas perturbé en cas de fort éclairage ambiant. De façon avantageuse, la fiabilité de détection du procédé selon le mode de réalisation dans lequel les premier et deuxième algorithmes sont mis en oeuvre est donc améliorée.

La figure 5 est une vue en coupe, partielle et schématique, d'un mode de réalisation des photodétecteurs 9, qui est notamment adapté au cas où les photodétecteurs font partie d'un dispositif de détection 70 fixé à un écran d'affichage. En figure 5, deux photodétecteurs 72 sont représentés. Les photodétecteurs 72 peuvent être répartis en rangées et en colonnes. En fonctionnement, chaque photodétecteur 72 recouvre partiellement un sous-pixel d'affichage 8 de l'écran d'affichage 5.

Les photodétecteurs 72 sont formés sur une face d'un support 74 ou substrat diélectrique transparent ou translucide, par exemple en verre ou en plastique.

Chaque photodétecteur 72 comprend un empilement comportant, dans l'ordre à partir du support 74 :
- un filtre coloré 75 filtrant les rayons lumineux de manière analogue au filtre coloré du sous-pixel d'affichage recouvert par le photodétecteur 72 ;
- une électrode transparente 76, par exemple, en oxyde conducteur et transparent ou TCO (acronyme anglais pour Transparent Conductive Oxide), par exemple en oxyde d'indium dopé à l'étain ou ITO (acronyme anglais pour Indium Tin Oxide) ;
- une portion 78 injectrice d'électrons, par exemple en un polymère semiconducteur organique transparent très dopé ou en un oxyde métallique transparent et conducteur, par exemple de type ZnO ;
- une portion 80 en un mélange de polymères semiconducteurs organiques, par exemple le poly(3-hexylthiophène) ou poly(3-hexylthiophène-2,5-diyl) (semiconducteur de type P), connu sous la dénomination P3HT, mélangé avec le [6,6]-phényl-C₆₁-butanoate de méthyle (semiconducteur de type N), connu sous la dénomination PCBM ;
- une portion 82 en un polymère semiconducteur organique très dopé (couche injectrice de trous), par exemple un polymère connu sous la dénomination PEDOT:PSS, qui est un mélange de poly(3,4)-éthylènedioxythiophène et de polystyrène sulfonate de sodium ; et
- une électrode 84, par exemple en aluminium ou en argent.

Latéralement, les régions semiconductrices 80 des photodétecteurs 72 sont séparées les unes des autres par un matériau diélectrique 86 transparent. En outre, un revêtement 88 de protection transparent recouvre la face supérieure de la matrice (côté électrodes 84).

Selon une variante, les filtres colorés 75 ne sont pas présents. Dans ce cas, chaque photodétecteur 72 est réalisé avec une réponse spectrale adaptée à la couleur devant être détectée. Ceci peut être obtenu par ajustement des composés polymères utilisés et des épaisseurs de couches constituant le photodétecteur 72.

Dans cet exemple, les photodétecteurs 72 sont destinés à être éclairés par l'éclairage ambiant à travers le substrat transparent 74, et à travers les couches transparentes 76 et 78. Le dispositif 70 peut recouvrir l'écran d'affichage 5 du côté du revêtement 88, chaque photodétecteur 72 étant placé au-dessus d'une zone noire de l'écran 5 ou étant masqué par des pistes métalliques d'un sous-pixel d'affichage de l'écran 5 afin de ne pas recevoir de lumière directement de l'écran 5.

Les électrodes transparentes 76 peuvent avoir, en vue de dessus, la forme de bandes parallèles. Dans ce cas, les électrodes opaques 84 peuvent correspondre à des bandes parallèles, chaque bande 84 étant connectée à tous les photodétecteurs d'une même rangée du dispositif de détection 70, et les bandes transparentes 76 s'étendent perpendiculairement aux rangées et sont connectées à des photodétecteurs de rangées différentes. A titre de variante, les électrodes 76 peuvent faire partie d'une plaque du matériau conducteur et transparent au contact avec tous les photodétecteurs 72.

Les photodétecteurs 72 du dispositif de détection 70 peuvent être réalisés par des techniques d'impression. Les matériaux des couches 78 à 88 décrites précédemment peuvent être déposés sous forme liquide, par exemple sous forme d'encres conductrices et semiconductrices à l'aide d'imprimantes à jet d'encre. Par matériaux sous forme liquide, on entend ici également des matériaux en gel déposables par des techniques d'impression. Des étapes de recuit sont éventuellement prévues entre les dépôts des différentes couches, mais les températures de recuit peuvent ne pas dépasser 150°C, et le dépôt et les éventuels recuits peuvent être réalisés à la pression atmosphérique.

La réalisation de composants semiconducteurs organiques par des techniques d'impression est par exemple décrite dans l'article "CEA-LITEN S2S printing platform for Organic CMOS and Sensors Devices" de Jean-Yves Laurent et al, conférence LOPE-C, juin 2011, Francfort.

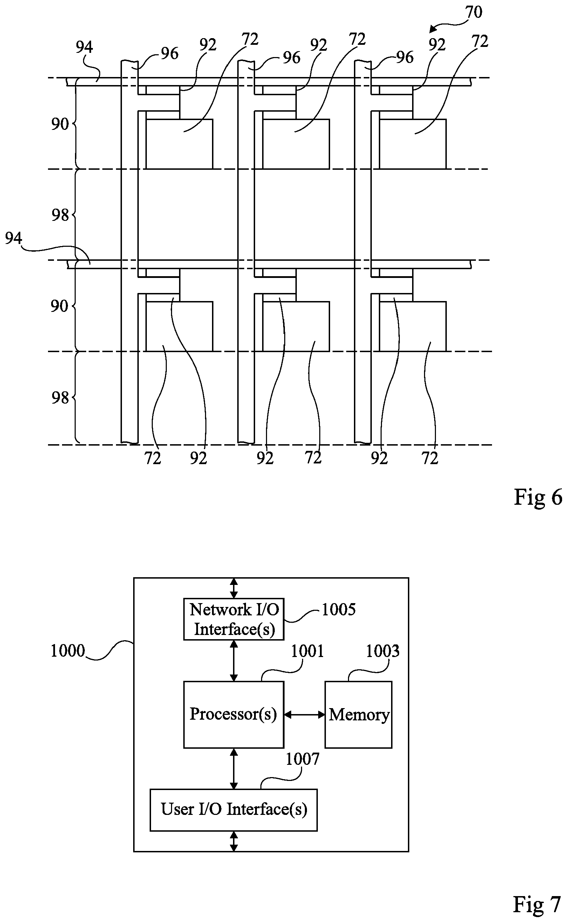

La figure 6 est une vue schématique de dessus du dispositif de détection 70 décrivant plus en détail les moyens de sélection des photodétecteurs 72. On a représenté, de façon schématique et partielle en figure 6, deux rangées 90 comprenant chacune trois photodétecteurs 72. Un élément de sélection 92 est associé à chaque photodétecteur 72. L'élément de sélection 92 peut correspondre à un transistor organique (en anglais Organic Thin Film Transistor ou OTFT). L'une des bornes parmi la source et le drain du transistor 92 est connectée à l'électrode 84 du photodétecteur 72 et l'autre borne parmi la source et le drain est connectée à une piste conductrice 94. La piste conductrice 94 peut être connectée à tous les éléments de sélection 92 d'une rangée 90. La piste 94 peut être en un matériau opaque, par exemple en métal. La grille de chaque transistor 92 peut être commandée par un signal transmis par une piste 96 d'un matériau conducteur et transparent s'étendant selon une direction perpendiculaire aux rangées 90. La piste 96 peut être connectée aux transistors 88 de rangées 90 différentes.

Dans le cas où le dispositif de détection 70 recouvre un écran d'affichage 5, deux rangées 90 adjacentes sont espacées par une rangée 98 d'un matériau transparent pour laisser le passage au flux de lumière provenant de l'écran d'affichage 5. De préférence, les rangées 90 ont une largeur inférieure à la largeur des rangées 98 afin de ne pas gêner la vision de l'écran d'affichage 5 par un utilisateur.

Dans le cas où le dispositif de détection 70 est intégré à l'écran d'affichage 5, les sous-pixels d'affichage 8 de l'écran d'affichage 5 sont réalisés dans chaque rangée 98.

Selon un autre mode de réalisation, que ce soit dans le cas où le dispositif de détection est intégré à l'écran d'affichage ou recouvre celui-ci, l'écran d'affichage tactile peut comprendre un réseau lenticulaire recouvrant le dispositif de détection 70. Le réseau lenticulaire peut correspondre au réseau lenticulaire décrit dans la demande de brevet français FR12/58546.

Le réseau lenticulaire comprend, par exemple, des lentilles cylindriques jointives qui s'étendent parallèlement aux rangées 90 et 98. Il peut s'agir de lentilles cylindriques plan-convexes. La largeur de chaque lentille est sensiblement égale à la somme des largeurs de la rangée 90 et de la rangée 98. La distance focale de chaque lentille est ajustée afin que la rangée 90 soit approximativement au foyer secondaire de la lentille. Le réseau lenticulaire est placé par rapport aux rangées 90 et 98 de sorte qu'une lentille recouvre une rangée 98 sur toute la largeur et au moins une partie de la largeur d'au moins une rangée 90 de photodétecteurs.

Chaque lentille dévie les rayons lumineux émis au travers de la rangée 98 ou collectés par la rangée 90 (qui forme une zone sombre). Les rayons lumineux issus d'une rangée 98 sont peu déviés et leurs directions restent relativement proches de l'axe optique tandis que les rayons lumineux réfléchis par une rangée 90 de photodétecteurs sont déviés dans une direction s'écartant fortement de l'axe optique. De ce fait, un utilisateur ne perçoit que les rayons lumineux issus des rangées 98 de sous-pixels d'affichage et ne perçoit pas la zone sombre des rangées 90 de photodétecteurs. L'utilisateur ne voit donc que l'image diffusée par l'écran d'affichage 5 et ne voit pas le dispositif de détection 70.

Des rayons lumineux, dont l'inclinaison par rapport à l'écran d'affichage est importante, tendent à être déviés par les lentilles et être reçus par les photodétecteurs du dispositif de détection. La détection de l'organe d'actionnement qui est à proximité du réseau lenticulaire peut se baser sur la détection de la présence ou de l'absence de ces rayons lumineux rasants. Le fonctionnement du dispositif de détection 70 n'est donc pas perturbé par la présence du réseau lenticulaire.

Dans les modes de réalisation décrits précédemment, on a considéré des photodétecteurs 9 adaptés à capter des ondes lumineuses de l'éclairage ambiant dans une plage de longueurs d'onde qui peut être différente de la plage de longueurs d'onde d'intérêt, par exemple autour d'une couleur primaire. Des filtres colorés sont alors disposés entre les sources lumineuses de l'éclairage ambiant et les photodétecteurs pour ne laisser passer que les ondes lumineuses dont les longueurs d'onde sont dans la plage d'intérêt. Toutefois, chaque photodétecteur 9 peut être conçu pour détecter seulement des ondes lumineuses dans la plage de longueurs d'onde d'intérêt qui peut être différente d'un photodétecteur à l'autre. Dans ce cas, les filtres colorés peuvent ne pas être présents.

Dans des modes de réalisation décrits précédemment, des étapes de procédé peuvent être effectuées en utilisant un ou plusieurs dispositifs de calcul. Les modes de réalisation ne sont pas limités à un fonctionnement avec un type particulier de dispositif de calcul.

La figure 7 est un schéma-bloc d'un dispositif de calcul 1000 qui peut être utilisé pour réaliser le module de détection 12 et/ou le module de commande d'affichage 10. Le dispositif de calcul 1000 peut comprendre un ou plusieurs processeurs 1001 (Processor(s)) et un ou plusieurs supports de stockage non transitoire lisibles par ordinateur (par exemple, la mémoire 1003 (Memory)). La mémoire 1003 peut stocker, dans un moyen de stockage non transitoire lisible par ordinateur, des instructions de programme informatique qui, lorsqu'elles sont exécutées, mettent en oeuvre les étapes du procédé de détection décrit ci-dessus. Le processeur ou les processeurs 1001 peuvent être couplés à la mémoire 1003 et peuvent exécuter ces instructions de programme d'ordinateur pour entraîner la réalisation de ces étapes.

Le dispositif de calcul 1000 peut également comprendre une interface 1005 d'entrée/sortie de réseau (Network I/O Interface(s)) par laquelle le dispositif de calcul peut communiquer avec d'autres dispositifs de calcul (par exemple, sur un réseau), et peut également comprendre une ou plusieurs interfaces d'utilisateur 1007 (User I/O Interface(s)), par l'intermédiaire desquelles le dispositif de calcul peut fournir un signal de sortie à un utilisateur et recevoir un signal d'entrée provenant de l'utilisateur. Les interfaces d'utilisateur peuvent comprendre des périphériques tels qu'un clavier, une souris, un microphone, un périphérique d'affichage (p.ex. un moniteur ou un écran tactile), des haut-parleurs, une caméra, et/ou divers autres types de périphérique entrée/sortie.

Les modes de réalisation décrits ci-dessus peuvent être mis en oeuvre de plusieurs façons. A titre d'exemple, les modes de réalisation peuvent être mis en oeuvre à l'aide d'un circuit dédié, d'un logiciel ou d'une combinaison de ceux-ci. Lorsqu'ils sont mis en oeuvre par logiciel, le code logiciel peut être exécuté sur n'importe quel processeur approprié (par exemple, un microprocesseur) ou un ensemble de processeurs, qu'ils soient prévus dans un dispositif de calcul unique ou répartis entre plusieurs dispositifs de calcul. Il convient de noter que tout composant ou ensemble de composants qui réalise les étapes de procédé décrites ci-dessus peut être considéré comme un ou plusieurs contrôleurs qui commandent les étapes décrites ci-dessus. Le contrôleur ou les contrôleurs peuvent être mis en oeuvre de nombreuses façons, par exemple avec un circuit électronique dédié ou avec un circuit à usage général (par exemple, un ou plusieurs processeurs) qui est programmé à l'aide un logiciel ou d'un microcode pour exécuter les étapes de procédé décrites ci-dessus.

À cet égard, il convient de noter qu'un mode de réalisation décrit ici comprend au moins un support de stockage lisible par ordinateur (RAM, ROM, EEPROM, mémoire flash ou une autre technologie de mémoire, CD-ROM, disque numérique polyvalent (DVD) ou un autre support à disque optique, cassette magnétique, bande magnétique, disque de stockage magnétique ou un autre dispositif de stockage magnétique, ou un autre support de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les étapes des modes de réalisation décrits ci-dessus. Le support lisible par ordinateur peut être transportable de sorte que le programme stocké sur celui-ci peut être chargé sur n'importe quel dispositif de calcul pour mettre en oeuvre des aspects des techniques décrites ici. En outre, il convient de noter que la référence à un programme d'ordinateur qui, lorsqu'il est exécuté, effectue l'une des étapes de procédé décrites ci-dessus, ne se limite pas à un programme d'application s'exécutant sur un ordinateur hôte. Au contraire, les termes programme d'ordinateur et logiciel sont utilisés ici dans un sens général pour faire référence à tout type de code informatique (par exemple, un logiciel d'application, un micrologiciel, un microcode, ou toute autre forme d'instructions d'ordinateur) qui peut être utilisé pour programmer un ou plusieurs processeurs pour mettre en oeuvre des aspects des procédés décrits précédemment.

Des modes de réalisation particuliers ont été décrits. Diverses variantes et modifications apparaîtront à l'homme de l'art. En particulier, bien qu'un mode de réalisation ait été décrit dans lequel deux algorithmes de recherche ont été mis en oeuvre, seul l'algorithme de recherche du reflet de l'image affichée par l'organe d'actionnement peut être mis en oeuvre.

## Revendications

1. Procédé comprenant les étapes suivantes :
afficher des premières images successives sur un écran (5) ; acquérir au moins une deuxième image avec un dispositif d'acquisition (9), la deuxième image étant une image couleur comprenant au moins deux sous-images associées à des couleurs distinctes ; et
rechercher la position d'au moins un organe d'actionnement (7) par rapport à l'écran à partir de la détection, dans chaque sous-image, du reflet de la première image par l'organe d'actionnement ou de l'ombre de l'organe d'actionnement, en déterminant si des conditions de détermination de la position de l'organe d'actionnement dans la deuxième image sont remplies, les conditions de détermination de la position de l'organe d'actionnement (7) étant remplies si le reflet de la première image par l'organe d'actionnement est détecté à la même position dans chaque sous-image ou si l'ombre de l'organe d'actionnement est détectée à la même position dans chaque sous-image,
modifier au moins l'une des prochaines premières images à afficher si les conditions de détermination de la position de l'organe d'actionnement dans la deuxième image sont seulement partiellement remplies, les conditions de détermination de la position de l'organe d'actionnement (7) étant seulement partiellement remplies si le reflet de la première image par l'organe d'actionnement (7) est détecté dans au moins l'une des sous-images et n'est pas détecté dans toutes les sous-images ou les conditions de détermination de la position de l'organe d'actionnement (7) par rapport à l'écran (5) étant seulement partiellement remplies si l'ombre de l'organe d'actionnement (7) est détectée dans l'une des sous-images et n'est pas détectée dans toutes les sous-images.

2. Procédé selon la revendication 1, dans lequel la deuxième image correspond à l'image de la lumière arrivant sur l'écran (5).

3. Procédé selon la revendication 1 ou 2, dans lequel l'intensité d'au moins certains pixels de la prochaine première image à afficher est augmentée ou diminuée.

4. Procédé selon l'une quelconque des revendications 1 à 3, dans lequel seule une partie de la prochaine première image à afficher est modifiée.

5. Procédé selon l'une quelconque des revendications 1 à 4, comprenant la recherche dans chaque sous-image d'au moins un premier motif donné représentatif du reflet de la première image par l'organe d'actionnement (7).

6. Procédé selon la revendication 5, comprenant la recherche dans chaque sous-image d'au moins un deuxième motif donné représentatif de l'ombre de l'organe d'actionnement (7).

7. Système (1) comprenant :
un écran (5) d'affichage de premières images successives ;
un dispositif d'acquisition (9) d'au moins une deuxième image, la deuxième image étant une image couleur comprenant au moins deux sous-images associées à des couleurs distinctes ; et
un dispositif (12) de recherche de la position d'au moins un organe d'actionnement (7) par rapport à l'écran à partir de la détection, dans chaque sous-image, du reflet de la première image par l'organe d'actionnement ou de l'ombre de l'organe d'actionnement, adapté à déterminer si des conditions de détermination de la position de l'organe d'actionnement dans la deuxième image sont remplies, les conditions de détermination de la position de l'organe d'actionnement (7) étant remplies si le reflet de la première image par l'organe d'actionnement est détecté à la même position dans chaque sous-image ou si l'ombre de l'organe d'actionnement est détectée à la même position dans chaque sous-image,
un dispositif de modification de la prochaine première image à afficher si les conditions de détermination de la position de l'organe d'actionnement dans la deuxième image sont seulement partiellement remplies, les conditions de détermination de la position de l'organe d'actionnement (7) étant seulement partiellement remplies si le reflet de la première image par l'organe d'actionnement (7) est détecté dans au moins l'une des sous-images et n'est pas détecté dans toutes les sous-images ou les conditions de détermination de la position de l'organe d'actionnement (7) par rapport à l'écran (5) étant seulement partiellement remplies si l'ombre de l'organe d'actionnement (7) est détectée dans l'une des sous-images et n'est pas détectée dans toutes les sous-images.

8. Système selon la revendication 7, dans lequel le dispositif d'acquisition (9) comprend une matrice de capteurs de photons, dans lequel l'écran (5) comprend une matrice de pixels d'affichage lumineux (8) et dans lequel la matrice de capteurs de photons recouvre l'écran ou est intégrée à la matrice de pixels d'affichage.

## Patentansprüche

1. Verfahren, das die folgenden Schritte aufweist:
Anzeigen erster aufeinanderfolgender Bilder auf einem Bildschirm (5);
Erfassen von zumindest einem zweiten Bild mit einer Vorrichtung zur Erfassung (9), wobei das zweite Bild ein Farbbild ist, das zumindest zwei Teilbilder aufweist, die mit unterschiedlichen Farben assoziiert sind; und
Suchen nach der Position von zumindest einem Betätigungsglied (7) relativ zu dem Bildschirm basierend auf der Detektion, in jedem Teilbild, der Reflektion des ersten Bilds durch das Betätigungsglied oder des Schattens des Betätigungsglieds, und zwar durch Bestimmen ob Bedingungen der Bestimmung der Position des Betätigungsglieds in dem zweiten Bild erfüllt sind, wobei die Bedingungen der Bestimmung der Position des Betätigungsglieds (7) erfüllt sind, wenn die Reflektion des ersten Bilds durch das Betätigungsglied bei der gleichen Position in jedem Teilbild detektiert wird oder wenn der Schatten des Betätigungsglieds bei der gleichen Position in jedem Teilbild detektiert wird,
Modifizieren von zumindest einem der nächsten ersten Bilder, die angezeigt werden sollen, wenn die Bedingungen der Bestimmung der Position des Betätigungsglieds in dem zweiten Bild nur teilweise erfüllt sind, wobei die Bedingungen der Bestimmung der Position des Betätigungsglieds (7) in dem zweiten Bild nur teilweise erfüllt sind, wenn die Reflektion des ersten Bilds durch das Betätigungsglied (7) in zumindest einem der Teilbilder detektiert wird und nicht in sämtlichen Teilbildern detektiert wird oder die Bedingungen der Bestimmung der Position des Betätigungsglieds (7) relativ zu dem Bildschirm (5) nur teilweise erfüllt sind, wenn der Schatten des Betätigungsglieds (7) in einem der Teilbilder detektiert wird und nicht in sämtlichen Teilbildern detektiert wird.

2. Verfahren gemäß Anspruch 1, wobei das zweite Bild mit dem Bild des Lichts übereinstimmt, das den Bildschirm (5) erreicht.

3. Verfahren gemäß Anspruch 1 oder 2, wobei die Intensität von zumindest bestimmten Pixeln des nächsten ersten Bilds, das angezeigt werden soll, erhöht oder verringert wird.

4. Verfahren gemäß einem der Ansprüche 1 bis 3, wobei ein Teil lediglich von dem nächsten ersten Bild, das angezeigt werden soll, modifiziert wird.

5. Verfahren gemäß einem der Ansprüche 1 bis 4, das das Suchen in jedem Teilbild nach zumindest einem ersten gegebenen Muster aufweist, das repräsentativ für die Reflektion des ersten Bilds durch das Betätigungsglied (7) ist.

6. Verfahren gemäß Anspruch 5, das das Suchen in jedem Teilbild nach zumindest einem zweiten gegebenen Muster aufweist, das repräsentativ für den Schatten des Betätigungsglieds (7) ist.

7. System (1), das Folgendes aufweist:
einen Bildschirm (5) zum Anzeigen erster aufeinanderfolgender Bilder;
eine Vorrichtung zur Erfassung (9) von zumindest einem zweiten Bild, wobei das zweite Bild ein Farbbild ist, das zumindest zwei Teilbilder aufweist, die mit unterschiedlichen Farben assoziiert sind; und
eine Vorrichtung (12) zum Suchen nach der Position von zumindest einem Betätigungsglied (7) relativ zu dem Bildschirm, basierend auf der Detektion in jedem Teilbild der Reflektion des ersten Bilds durch das Betätigungsglied oder des Schattens des Betätigungsglieds, die ausgelegt ist, um zu bestimmen, ob Bedingungen der Bestimmung der Position des Betätigungsglieds in dem zweiten Bild erfüllt sind, wobei die Bedingungen der Bestimmung der Position des Betätigungsglieds (7) erfüllt sind, wenn die Reflektion des ersten Bilds durch das Betätigungsglied bei der gleichen Position in jedem Teilbild detektiert wird oder wenn der Schatten des Betätigungsglieds bei der gleichen Position in jedem Teilbild detektiert wird,
eine Vorrichtung zum Modifizieren der nächsten ersten Bilder, die angezeigt werden sollen, wenn die Bedingungen der Bestimmung der Position des Betätigungsglieds in dem zweiten Bild nur teilweise erfüllt sind, wobei die Bedingungen der Bestimmung der Position des Betätigungsglieds (7) in dem zweiten Bild nur teilweise erfüllt sind, wenn die Reflektion des ersten Bilds durch das Betätigungsglied (7) in zumindest einem der Teilbilder detektiert wird und nicht in sämtlichen Teilbildern detektiert wird oder die Bedingungen der Bestimmung der Position des Betätigungsglieds (7) relativ zu dem Bildschirm (5) nur teilweise erfüllt sind, wenn der Schatten des Betätigungsglieds (7) in einem der Teilbilder detektiert wird und nicht in sämtlichen Teilbildern detektiert wird.

8. System gemäß Anspruch 7, wobei die Erfassungsvorrichtung (9) eine Anordnung von Photonensensoren aufweist, wobei der Bildschirm (5) eine Anordnung von Lichtanzeigepixeln (8) aufweist und wobei die Anordnung von Photonensensoren den Bildschirm abdeckt oder in die Anzeigepixelanordnung integriert ist.

## Claims

1. A method comprising the steps of:
displaying first successive images on a screen (5);
acquiring at least one second image with a device of acquisition (9), the second image being a color image comprising at least two sub-images associated with different colors; and
searching for the position of at least one actuation member (7) relative to the screen based on the detection, in each sub-image, of the reflection of the first image by the actuation member or of the shadow of the actuation member, by determining whether conditions of determination of the position of the actuation member in the second image are fulfilled, the conditions of determination of the position of the actuation member (7) being fulfilled if the reflection of the first image by the actuation member is detected at the same position in each sub-image or if the shadow of the actuation member is detected at the same position in each sub-image,
modifying at least one of the next first images to be displayed if the conditions of determination of the position of the actuation member in the second image are only partially fulfilled, the conditions of determination of the position of the actuation member (7) in the second image being only partially fulfilled if the reflection of the first image by the actuation member (7) is detected in at least one of the sub-images and is not detected in all the sub-images or the conditions of determination of the position of the actuation member (7) relative to the screen (5) being only partially fulfilled if the shadow of the actuation member (7) is detected in one of the sub-images and is not detected in all the sub-images.

2. The method of claim 1, wherein the second image corresponds to the image of the light reaching the screen (5).

3. The method of claim 1 or 2, wherein the intensity of at least certain pixels of the next first image to be displayed is increased or decreased.

4. The method of any of claims 1 to 3, wherein a portion only of the next first image to be displayed is modified.

5. The method of any of claims 1 to 4, comprising searching in each sub-image for at least one first given pattern representative of the reflection of the first image by the actuation member (7).

6. The method of claim 5, comprising searching in each sub-image for at least one second given pattern representative of the shadow of the actuation member (7).

7. A system (1) comprising:
a screen (5) for displaying first successive images;
a device of acquisition (9) of at least one second image, the second image being a color image comprising at least two sub-images associated with different colors; and
a device (12) for searching for the position of at least one actuation member (7) relative to the screen based on the detection, in each sub-image, of the reflection of the first image by the actuation member or of the shadow of the actuation member, adapted to determine whether conditions of determination of the position of the actuation member in the second image are fulfilled, the conditions of determination of the position of the actuation member (7) being fulfilled if the reflection of the first image by the actuation member is detected at the same position in each sub-image or if the shadow of the actuation member is detected at the same position in each sub-image,
a device for modifying the next first images to be displayed if the conditions of determination of the position of the actuation member in the second image are only partially fulfilled, the conditions of determination of the position of the actuation member (7) in the second image being only partially fulfilled if the reflection of the first image by the actuation member (7) is detected in at least one of the sub-images and is not detected in all the sub-images or the conditions of determination of the position of the actuation member (7) relative to the screen (5) being only partially fulfilled if the shadow of the actuation member (7) is detected in one of the sub-images and is not detected in all the sub-images.

8. The system of claim 7, wherein the acquisition device (9) comprises an array of photon sensors, wherein the screen (5) comprises an array of light display pixels (8) and wherein the array of photon sensors covers the screen or is integrated to the display pixel array.
